# EUROPEAN PATENT SPECIFICATION

(11) **EP 1 898 119 B1**
(45) Date of publication and mention of the grant of the patent: **06.04.2011**
(21) Application number: 07017421.4
(22) Date of filing: 05.09.2007
(51) Int. Cl.: F16F 9/512

(54) **Valve structure**
Ventilstruktur
Structure de soupape

(30) Priority: 07.09.2006 JP 2006242283; 22.12.2006 JP 2006345242
(43) Date of publication of application: 12.03.2008
(73) Proprietor: KAYABA INDUSTRY CO., LTD., Minato-ku, Tokyo 105-6190 (JP)
(72) Inventor: Chikamatsu, Satoshi, Minato-ku Tokyo 105-6190 (JP); Watanabe, Kouichi, Minato-ku Tokyo 105-6190 (JP)
(74) Representative: Grünecker, Kinkeldey, Stockmair & Schwanhäusser Anwaltssozietät

(56) References cited:
- GB-A- 2 394 758
- JP-A- 9 291 961
- US-A- 5 386 892
- US-A1- 2005 115 786

## Description

### FIELD OF THE INVENTION

This invention relates to a valve structure of a damper (see, for example, US 2005/115 786 A1, corresponding to the preamble of claim 1).

### BACKGROUND OF THE INVENTION

Conventionally, in a valve structure of a damper, for example, those, which are used in a piston part and the like of a damper for a vehicle, and having a ring-shaped leaf valve layered to an exit end of a port provided to a piston part and opening and closing the port with this leaf valve are known.

Especially, with the valve structure of the damper which opens and closes the port with the leaf valve by fixedly supporting the inner periphery of the leaf valve and deflecting the outer periphery side, the damping force in the middle to high speed range of the piston speed becomes too large and the riding quality in the vehicle may be impaired.

To solve this, JP9-291961A discloses, as illustrated in Fig. 6, a valve structure of a damper in which the inner periphery side of the leaf valve L is not fixedly supported, but the inner periphery of the leaf valve L is slidably contacted against the piston rod R or the outer periphery of the tubular piston nut N for fixing the piston P to the piston rod R and the back side of the leaf valve L is biased by the spring S through the main valve M.

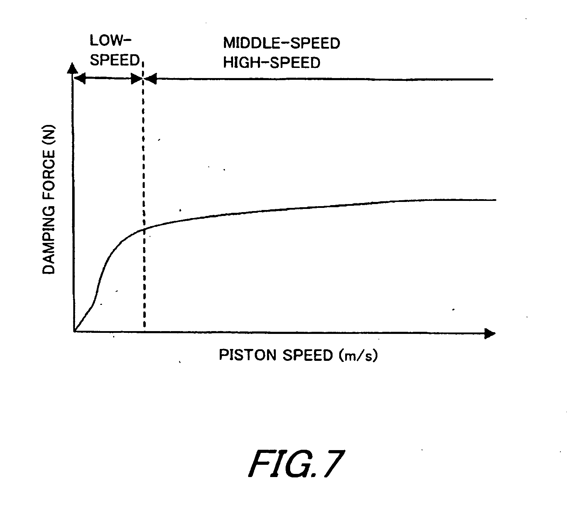

In the damper applied this valve structure, as illustrated, when the piston speed of the piston P moving upward is in the low-speed range, the outer periphery side of the relief valve L is deflected about the contacted part of the main valve M laminated on the leaf valve L as a supporting point. Thus, as illustrated in Fig. 7, the approximately same damping property as that of the valve structure in which the inner periphery is fixedly supported is exhibited, and when the piston speed is reached to the middle to high speed range, the pressure of the working fluid passing through the port Po is applied to the leaf valve L. Thereby, the leaf valve L is lifted in the axial direction from the piston P and moved backward with the main valve M against the biasing force of the spring S, and so, the flow channel area is increased compared to the valve structure of the damper in which the inner periphery is fixedly supported and the damping force is inhibited from becoming too large, therefore, it is capable of improving the riding quality in the vehicle.

### SUMMARY OF THE INVENTION

However, in the valve structure as described above, although it is the useful technique capable of improving the riding quality in the vehicle, there is a possibility of causing the following problems.

For example, when the piston speed of the piston P moving upward reaches the high-speed range, in the conventional valve structure of the damper, the leaf valve L is only moved backward and lifted from the piston P in the axial direction according to the piston speed, and the damping coefficient is not increased.

Therefore, the damping force tends to be not enough when the piston speed reaches to the high-speed range, a vibration control is not sufficiently achieved, and thus the riding quality in the vehicle becomes impaired.

Thus, the present invention has been made to improve the above described problems, and it is an object thereof to provide a valve structure of a damper capable of improving the riding quality in the vehicle even when the piston speed is reached to the high-speed range.

To achieve the above described object, a valve srtructure is provided having the characterizing features of claim 1 in combination with those of the preamble as known, for example, from the above-mentioned US 2005/115 786 A1. The valve structure of the damper comprises a piston defining a first chamber and a second chamber within a damper and having a port for communicating the first chamber and the second chamber, and a leaf valve layered to the end surface of the second chamber side of the piston, for closing the port against the flowing direction of the working fluid when the working fluid is flowing from the first chamber to the second chamber, wherein a first flow channel and a second flow channel are provided in parallel to each other for connecting the upstream side of the port in the direction of the flow and the first chamber, an open/close valve for closing the first flow channel when the pressure of the first chamber is exceeded the pressure inside the first flow channel by the prescribed level, a relief valve being provided in the second flow channel, which is opened with the pressure higher than the pressure with which the open/close valve is closed.

According to the valve structure of the damper of the present invention, which is defined in claim 1, when the piston speed is reached to the high-speed range, the damping force can be larger than that when the piston speed is in the middle-speed range, thus the damping force is always sufficient even when the piston speed is reached to the high-speed range, and so it is capable to sufficiently perform the vibration control to improve the riding quality in the vehicle.

Further, under such situation that the vibration amplitude is large where the damper is most extended and the piston speed is reached to the high-speed range, damping coefficient can be increased to increase the generated damping force of the damper, thereby the piston speed can be readily decreased and the shock at the time of the most extension can be softened.

### BRIEF DESCRIPTION OF THE DRAWINGS

Referring now to the attached drawings which form a part of this original disclosure.

Fig. 1 is a longitudinal sectional diagram of a piston part of a damper of the valve structure of the damper in the first embodiment.

Fig. 2 is a diagram showing a damping property in a damper of the valve structure of the damper in the first embodiment.

Fig. 3 is a diagram showing a change of damping force with time.

Fig. 4 is a longitudinal sectional diagram of a part of a piston part of a valve structure of a damper in the second embodiment.

Fig. 5 is a longitudinal sectional diagram of a piston part of a damper of a valve structure of the damper in the third embodiment.

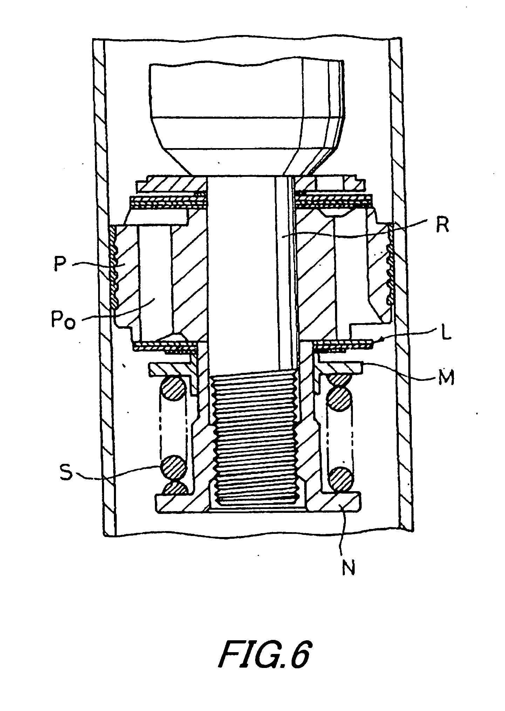

Fig. 6 is a longitudinal sectional diagram of a piston part of a damper of the conventional, i.e prior art valve structure of the damper.

Fig. 7 is a diagram showing a damping property of a damper of the conventional, i.e. prior art valve structure of the damper.

### DETAILED DESCRIPTION OF THE PREFERRED EMBODIMENT

In the following, a description is given to the valve structure and damper of the present invention according to the drawings.

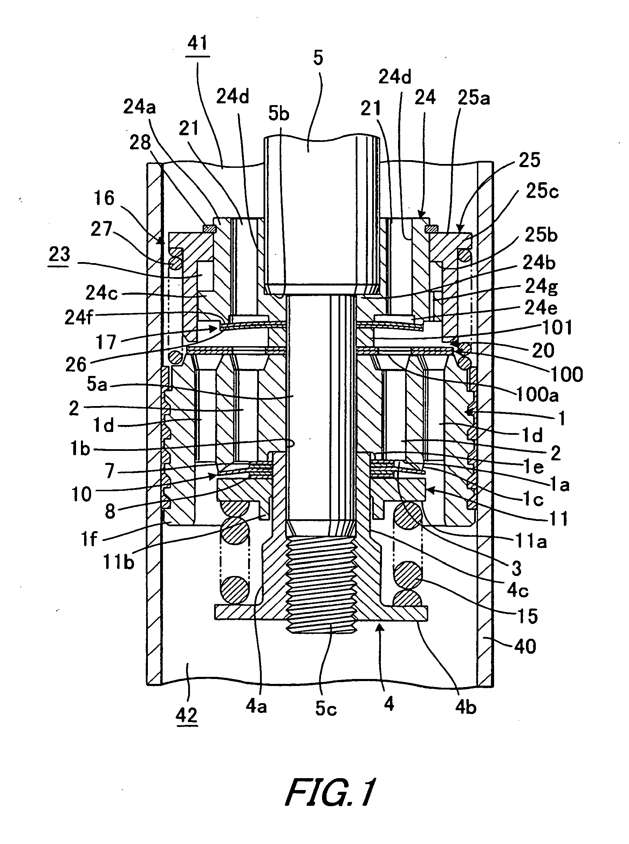

The valve structure of the damper in the first embodiment is, as shown in Fig. 1, used in the extending side damping valve of the piston part of the damper.

The valve structure of the damper is provided with a piston 1 which is a valve disc linked to the tip end of a piston rod 5 which is a shaft member, for defining an upper chamber 41 which is a first chamber and a lower chamber 42 which is a second chamber within the damper and provided with a port 2 for communicating the upper chamber 41 and the lower chamber 42, a ring-shaped leaf valve 10 layered to the end surface of the lower chamber 42 side of the piston 1 for closing the port 2, a ring-shaped valve suppressing member 11 layered to the leaf valve 10, a coil spring 15 which is a biasing means for biasing the leaf valve 10 through the valve suppressing member 11 to the direction closing the port 2, a first flow channel 20 and a second flow channel 21 provided in parallel to each other for connecting the upstream side of the port 2 and the upper chamber 41, an open/close valve 16 for closing the first flow channel 20 when the pressure of the upper chamber 41 is exceeded the pressure inside the first flow channel 20 by the prescribed level, and a relief valve 17 provided in the second flow channel 21 which is opened with the pressure higher than the pressure with which the open/close valve 16 is closed.

The damper having the valve structure is not described in detail with illustrations, as it is widely known, however, specifically, for example, a cylinder 40, a head member (not illustrated) for sealing the upper end of the cylinder 40, a piston rod 5 penetrating through the head member (not illustrated) in a freely slidable manner, the piston 1 provided to the end part of the piston rod 5, the upper chamber 41 and the lower chamber 42 which are 2 pressure chambers defined by the piston 1 within the cylinder 40, a sealing member (not illustrated) for sealing the lower end of the cylinder 40, and a reservoir or an air chamber (not illustrated) for compensating the volumetric change within the cylinder corresponding to the volume of the piston rod 5 projected out from the cylinder 40 are provided. Fluid, specifically working fluid is charged in the cylinder 40.

In the valve structure, when the piston 1 is moved upward in the cylinder 40 in Fig. 1, in other words, when the pressure in the upper chamber 41 is increased and the working fluid is moved from the upper chamber 41 to the lower chamber 42 through the port 2, the prescribed pressure loss is caused by creating the resistance against the movement of the working fluid by the leaf valve 10. The valve structure is functioned as a damping force generating component for generating the prescribed damping force to the damper.

In the following, a detailed description of this valve structure is given. The piston 1 which is a valve disc is formed into a cylinderical shape having a bottom. The piston 1 is provided with an insertion hole 1b which is provided to the shaft central part of the bottom part 1a and into which the piston rod 5 of the damper is inserted through, the port 2, an aperture 3 communicated to the port 2, a ring-shaped valve seat 1c formed to the outer periphery side of the aperture 3 which is the exit end of the port 2 and projected from the bottom part 1a of the piston 1 to the leaf valve 10 side, and the cylinderical part 1f extendingly provided to the outer periphery side.

In addition, in the piston 1, a compressing side port 1d for allowing the flow of the working fluid to the upper chamber 41 from the lower chamber 42 during the compression of the damper is provided at the outer periphery side of the port 2 of the extending side of the bottom part 1a.

The piston rod 5 is inserted through the insertion hole 1b of the piston 1, and the tip end part of the piston rod 5 is projected to the lower side of the piston 1 in Fig. 1. In addition, the outer diameter of the tip end 5a of the piston rod 5 is smaller than the outer diameter of the piston rod 5 positioned at the upper side of the tip end 5a in Fig. 1. Further, a stepped part 5b is formed at the portion where the outer diameters of the upper side and the tip end part are different.

A piston nut 4 is screwed to the tip end 5a of the piston rod 5. The piston nut 4 is provided with a cylindrical part 4a, and a flange 4b extendingly provided from the lower end outer periphery in Fig. 1. A small diameter part 4c having a smaller diameter than the cylindrical part 4a is formed to the upper end outer periphery of the cylindrical part 4a.

The tip end 5a of the piston rod 5 is inserted in a shutter supporting member 24 to the outer periphery of which the tubular shutter 25 is installed in a freely slidable manner, the leaf valve 26 layered to the end surface of the piston 1 side of the shutter supporting member 24, a spacer 101, the leaf valve 100 of the compressing side and piston 1 in this order through the hole provided at the central side of the each of these members respectively, at the same time, the piston nut 4 is screwed to the screwed part 5c provided to the tip end of the piston rod 5 from below the piston 1 in Fig. 1, thereby, the above described respective members are fixed to the piston rod 5 by being sandwiched between the stepped part 5b of the piston rod 5 and the upper end of the piston nut 4.

The diameter of the lower end opening part in the insertion hole 1b provided to the bottom part 1a of the piston 1 is widened to provide a wide diameter part 1e and the stepped part is formed, and the upper end in Fig. 1 of the small diameter part 4c in the cylinderical part 4a can be inserted to this stepped part.

The plurality of ring-shaped spacer 7 having smaller outer diameter than the outer diameter of the leaf valve 10 slidably contacted to the outer periphery of the small diameter part 4c of the piston nut 4 are layered to the bottom part 1a of the piston 1. And, the leaf valve 10 slidably contacted to the outer periphery of the small diameter part 4c is layered to the lower side of the spacer 7. Further, the plurality of ring-shaped spacer 8 having the smaller outer diameter than the outer diameter of the leaf valve 10 and slidably contacted to the outer periphery of the small diameter part 4c are layered to the lower side of the leaf valve 10. In addition, the valve suppressing member 11 slidably contacted to the outer periphery of the small diameter part 4c is layered to the lower side of the spacer 8.

The leaf valve 10 is a layered leaf valve which is constructed by being layered a plurality of leaf formed into a ring-shape, the upper surface in Fig. 1 of the leaf valve 10 is contacted against the valve seat 1c so that the port 2 of the piston 1 can be closed. In addition, in the leaf valve 10, although not illustrated in detail, a notch provided to the outer periphery of the leaf which is seated on the valve seat 1c or the widely known orifice formed by being punched to the valve seat 1c is provided.

Further, in this embodiment, although the leaf valve 10 is constructed as a layered leaf valve, the number of the above described leaf may be in any number according to the damping property (the relation of the damping force against the piston speed) achieved by the present valve structure, it may be in plural or in only one according to the damping property to be generated in the damper. Further, each of the leaf can be set to have different outer diameter in accordance with the damping property to be generated in the damper.

By providing the wide diameter part 1e, the piston nut 4 can be positioned in the radius direction in relation to the piston 1, it becomes possible to install the leaf valve 10, the spacer 7, 8, the valve suppressing member 11 to the tip end 5a of the piston rod 5 all in once together with the piston 1 after installing these members to the piston nut 4, and it is convenient upon production, however, the wide diameter part 1e may be omitted.

As described above, by forming the piston 1 into cylindrical shape having a bottom, it becomes possible to house the members constructing the valve structure such as the leaf valve and the like in the piston 1.So, the length between the upper end of the piston 1 in Fig. 1 and the lower end of the piston nut 4 in Fig. 1 can be shortened and the piston part can be made smaller.

The valve suppressing member 11 layered at the lowest in Fig. 1 is provided with a ring-shaped main body 11a having the inner periphery slidably contacted to the outer periphery of the small diameter part 4c of the piston nut 4 and the outer diameter set to approximately the same as the outer diameter of the leaf valve 10, and a cylindrical part 11b extended downward from the lower end of the ring-shaped main body 11a in Fig. 1 and also having the inner periphery slidably contacted to the outer periphery of the small diameter part 4c.

The coil spring 15 which is a biasing means is interveningly provided between the ring-shaped main body 11a and the flange 4b of the piston nut 4, and the leaf valve 10 is pressed to the valve seat 1c side through the valve suppressing member 11 by the coil spring 15.

In addition, although it is possible to omit the cylindrical part 11b, the cylindrical part 11b has a function to center the coil spring 15, and the biasing force of the coil spring 15 can be applied to the valve suppressing member 11 evenly by this centering function, and so it is desired to be provided.

According to the above described construction, the biasing force of the coil spring 15 is applied to the inner periphery side of the leaf valve 10 through the valve suppressing member 11, thereby the leaf valve 10 is biased to the direction closing the port 2 by the coil spring 15.

Therefore, the leaf valve 10 and the valve suppressing member 11 are constructed such that when the piston 1 is moved upward in Fig. 1 and the difference between the pressure in the upper chamber 41 and the pressure in the lower chamber 42 becomes large, whole of the leaf valve 10 is moved backward from the piston 1 in the axial direction, in another word, lifted downward in Fig. 1 against the biasing force with compressing the coil spring 15.

The overall thickness of the spacer 7 in the axial direction is set to shorter than the length between the bottom part 1a of the piston 1 and the tip end of the valve seat 1c in the axial direction to provide an initial deflection to the leaf valve 10 to which the biasing force is applied to the inner periphery side.

With the settings of the amount of deflection of this initial deflection, the valve opening pressure at which the leaf valve 10 is separated from the valve seat 1c to open the port 2 can be adjusted. The amount of deflection of this initial deflection can be changed by the overall thickness of the spacer 7, and it is set optimally in the vehicle and the like to which the damper is applied. In addition, it is possible to omit the spacer 7 depending on the distance between the bottom part 1a of the piston 1 and the lower end of the valve seat 1c in the axial direction.

In the above description, although the biasing means is the coil spring 15, it is only necessary to apply the prescribed biasing force to the leaf valve 10, the coil spring may be for example, conical spring or leaf spring, and elastic body such as rubber and the like.

Next, detailed description is given to each of the members arranged above the piston 1 in Fig. 1. A tubular shutter supporting member 24 opposing to the piston 1 through the spacer 101 is laminated above the piston 1.

The shutter supporting member 24 is provided with, a tubular main body 24a, an inner periphery flange 24b projecting inside from the lower end inner periphery of the main body 24a, an outer periphery flange 24c projecting outside from the lower end outer periphery of the main body 24a, supporting port 24d penetrating through the main body 24a from the top to the bottom, an aperture 24e provided to the lower end of the main body 24a and communicated to the lower end opening part of the supporting port 24d, a ring-shaped valve seat 24f provided to the outer periphery of the aperture 24e, and an orifice passage 24g penetrating through the outer periphery flange 24c from the top to the bottom.

The shutter supporting member 24 is fixed to the outer periphery of the piston rod 5 by the inner periphery flange 24b of which is sandwiched between the stepped part 5b of the piston rod 5 and the piston nut 4.

The leaf valve 26 layered to the end surface of the piston 1 side of the shutter supporting member 24 closes the lower end of the supporting port 24d by being seated to the ring-shaped valve seat 24f. Further, the tubular shutter 25 is installed to the outer periphery of the main body 24a of the shutter supporting member 24 in a freely slidable manner.

The shutter 25 is provided with the tubular main body 25a, the inner periphery flange 25b projecting inside from the upper end inner periphery of the main body 25a, and an outer periphery flange 25c projecting outside from the upper end outer periphery of the main body 25a.

The pressure chamber 23 is formed by the space formed between the shutter 25 and the shutter supporting member 24, in other words, the space defined by the main body 25a of the shutter 25, the main body 24a of the shutter supporting member 24, the outer periphery flange 24c of the shutter supporting member 24, and the inner periphery flange 25b of the shutter 25, by slidably contacting the inner periphery of the main body 25a to the outer periphery of the outer periphery flange 24c of the shutter supporting member 24 and at the same time, slidably contacting the inner periphery of the inner periphery flange 25b to the outer periphery of the main body 24a of the shutter supporting member 24.

The coil spring 27 which is a spring is interveningly provided between the outer periphery flange 25c of the shutter 25 and the outer periphery of the piston 1. The further upward movement of the shutter 25 is restricted by the ring 28 installed to the upper end outer periphery of the main body 24a of the shutter supporting member 24, and the shutter 25 is contacted against the ring 28 at the upper end of the shutter 25 by being continuously biased by the coil spring 27 to the direction away from the piston 1.

The first flow channel 20 is formed by the ring-shaped clearance gap formed between the shutter supporting member 24 and the piston 1, and the first flow channel 20 is communicated to the upstream of the port 2 through the hole 100a provided to the leaf valve 100. Further, since the pressure chamber 23 is connected to the first flow channel 20 through the orifice passage 24g, the pressure in the first flow channel 20 is applied to the inside of the pressure chamber 23.

When the shutter 25 is moved downward in Fig. 1 and contacted against the upper surface outer periphery of the leaf valve 100 layered to the piston 1, because the leaf valve 100 is layered to the piston 1, the first flow channel 20 is closed. In addition, the shutter 25 may be directly contacted to the piston 1 to close the first flow channel 20.

The open/close valve 16 is constructed with the shutter 25 and the coil spring 27. Since the open/close valve 16 also functions as a restrictor for providing the resistance to the flow of the working fluid from the upper chamber 41 to the lower chamber 42 at the clearance gap between the shutter 25 and the piston 1, differences is caused between the pressure in the upper chamber 41 and the pressure in the first flow channel 20.

The shutter 25 is biased upward in Fig. 1 by receiving the pressure by the coil spring 27 and the pressure in the first flow channel 20 applied within the pressure chamber 23. On the other hand, the shutter 25 is biased downward in Fig. 1 by receiving the pressure of the upper chamber 41 making the inner periphery flange 25b of the shutter 25 as a pressure receiving area.

The open/close valve 16 functions as the restrictor, thereby, when the pressure in the upper chamber 41 exceeds the pressure in the first flow channel 20 by the prescribed level, the shutter 25 is moved towards the piston 1 side to close the first flow channel 20. In addition, since the pressure chamber 23 is connected to the first flow channel 20 through the orifice passage 24g, the movement of the shutter 25 becomes slow and the first flow channel 20 is not closed rapidly.

The second flow channel 21 is, in the case of this embodiment, formed by the supporting port 24d and communicated to the first flow channel 20, and the second flow channel 21 is also communicated to the upstream of the port 2 through the hole 100a of the leaf valve 100. The first flow channel 20 and the second flow channel are provided in parallel to each other.

In the case of this embodiment, the relief valve 17 provided to the second flow channel 21 is constructed with the leaf valve 26 for closing the lower end of the supporting port 24d in Fig. 1.

Next, the description is given of the operation of the valve structure of the damper in this embodiment.

When the piston 1 is moved upward in Fig. 1 in relation to the cylinder 40, the pressure in the upper chamber 41 is increased, and the working fluid in the upper chamber 41 would be transferred to the inside of the lower chamber 42 through the port 2.

In the case where the piston speed which is the expansion and contraction speed of the damper is in the low-speed range, the pressure loss in the open/close valve 16 is low, and the difference between the pressure in the upper chamber 41 and the pressure in the first flow channel 20 is small, thus, the first flow channel 20 is not closed by the shutter 25. Further, since the difference between the pressure in the upper chamber 41 and the pressure in the first flow channel 20 is small, the leaf valve 26 is not separated from the ring-shaped valve seat 24f, and the relief valve 17 is kept closed. Further, although the working fluid passed through the first flow channel 20 is transferred through the port 2 to the lower chamber 42, the leaf valve 10 can not be moved backward and lifted from the piston 1 against the biasing force of the coil spring 15, and the leaf valve 10 is pressed so as to close the port 2 by being biased by the coil spring 15. Thus, the amount of deflection of the leaf valve 10 deflected about the outer periphery edge of the spacer 8 as the supporting point is only little, and the working fluid is mainly passed through the orifice formed by the notch provided on the outer periphery of the leaf which is seated on the valve seat 1c of the leaf valve 10, or by being punched in the valve seat 1c.

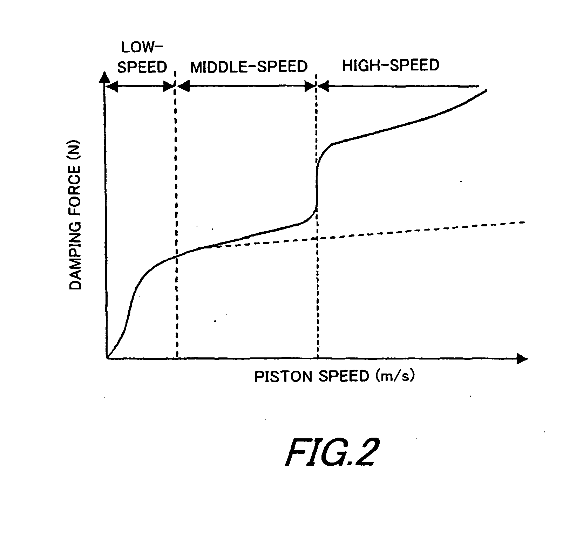

The ring-shaped clearance gap formed between the leaf valve 10 and the valve seat 1c is very small, and the working fluid is passed through the orifice, therefore, the damping property (relationship of the damping force against the piston speed) at this time is such that, as illustrated in Fig. 2 with the solid line, the damping coefficient is relatively large in the low-speed range.

When the speed of the piston 1 reaches the middle-speed range, the difference between the pressure in the upper chamber 41 and the pressure in the first flow channel 20 becomes larger, and so the thrust applied to the shutter 25 becomes larger compared to the case where the speed of the piston 1 is in the low-speed range. However, even when this piston speed is in the middle-speed range, the shutter 25 is set so as not to decrease the flow channel area of the first flow channel 20, and the communicated state of the first flow channel 20 to the upper chamber 41 is maintained. Further, when the speed of the piston 1 is in the middle-speed range, the leaf valve 26 is not separated from the ring-shaped valve seat 24f, and the relief valve 17 is kept closed. In another words, when the piston speed is in the middle-speed range, the open/close valve 16, relief valve 17 and the like are set such that the pressure in the upper chamber 41 does not exceed the pressure in the first flow channel 20 by the prescribed level. When the piston speed is in the middle-speed range, the prescribed level is set such that the first flow channel 20 is not closed by the open/close valve 16.

Further, in the state where the speed of the piston 1 reaches the middle-speed range, the difference between the pressure in the upper chamber 41 and the pressure in the lower chamber 42 becomes larger, and the force of the working fluid pressing the leaf valve 10 downward in Fig. 1 becomes larger, therefore, the force of pressing down overcomes the biasing force of the coil spring 15, and the overall leaf valve 10 is moved backward from the piston 1 in the axial direction. In another word, the leaf valve 10 is moved downward in Fig. 1 and lifted, thus the clearance gap between the valve seat 1c and the leaf valve 10 becomes larger as the piston speed gets faster.

In other words, the damping property when the piston speed is in the middle-speed range becomes the damping property that, as illustrated in Fig. 2 with the solid line, the pressure loss due to the open/close valve 16 arranged at upper side from the piston 1 is added to the damping property illustrated with the broken line in Fig. 2, which is the damping property in the case where the overall leaf valve 10 is separated from the bottom part 1a of the piston 1 in the valve structure only constructed with the members arranged below the piston 1 in Fig. 1.

When the piston speed reaches the high-speed range, the force of the working fluid pressing the leaf valve 10 downward in Fig. 1 becomes even larger, and the distance that the leaf valve 10 is moved backward from the piston 1 in Fig. 1 becomes greater, and the clearance gap between the leaf valve 10 and the valve seat 1c becomes greater than when the piston speed is in the middle-speed range.

As the difference between the pressure in the upper chamber 41 and the pressure in the first flow channel 20 becomes even greater, the shutter 25 overcomes the biasing force by the coil spring 27 and the pressure applied in the pressure chamber 23 and contacts against the upper end outer periphery in Fig. 1 of the leaf valve 100 layered to the piston 1 to close the first flow channel 20. Then, at this time, the leaf valve 26 which has closed the supporting port 24d forming the second flow channel 21 is deflected and the second flow channel 21 is relieved by the relief valve 17. When the piston speed is in the high-speed range, the open/close valve 16 is set such that the pressure in the upper chamber 41 is exceeded the pressure in the first flow channel 20 by the prescribed level. When the piston speed is in the high-speed range, the prescribed level is set such that the first flow channel 20 is closed by the open/close valve 16. Further, the relief valve 17 is set so as to open after the open/close valve 16 is closed. That is, when the pressure in the upper chamber 41 becomes higher than the pressure in the downstream side of the relief valve 17 in the second flow channel 21 and at the same time, higher than the pressure that the open/close valve 16 is closed, the relief valve 17 is opened.

Therefore, when the speed of the piston 1 is in the high-speed range, the working fluid in the upper chamber 41 is transferred to the lower chamber 42 through the second flow channel 21 and port 2, and the working fluid is passed through the relief valve 17 and the leaf valve 10. The pressure loss during the working fluid is passed through the relief valve 17 and the leaf valve 10 becomes very large.

That is, when the piston speed is in the high-speed range, the first flow channel 20 is closed and instead of this, the relief valve 17 which has closed the second flow channel 21 opens the second flow channel 21, the pressure loss during the working fluid is passed through the relief valve 17 and the leaf valve 10 becomes very large, thus, the damping property when the piston speed is in the high-speed range is such that, as illustrated in Fig. 2, the damping force is rapidly increased from the middle-speed range, and the gradient of the damping force is depended on the property of the leaf valve 26 as the relief valve 17 is constructed with the leaf valve 26 and becomes low.

In addition, since the damping property in Fig. 2 shows a steady damping force against the piston speed, it seems that the damping force is increased rapidly when the piston speed becomes the high-speed range, however, it requires a certain length of time until the first flow channel 20 is closed by the shutter 25 because the pressure chamber 23 is communicated with the first flow channel 20 through the orifice passage 24g.

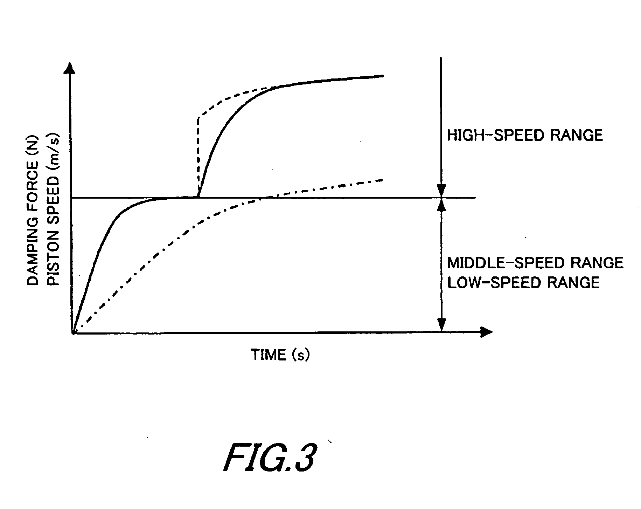

Therefore, when the time is taken in the horizontal axis, and the damping force and piston speed is taken in vertical axis, as illustrated in Fig. 3, as the piston speed shown with the alternating long and short dash line is changed from the middle-speed range to the high-speed range, the damping property shown with the solid line is such that the damping force is increased as the time passes. Thus, in practice, there is no rapid change of the damping force, and the vehicle passenger would not feel uncomfortable feeling with the rapid change of the damping force or shock. In addition, if the pressure chamber 23 is simply communicated with the lower chamber 42 without providing the orifice passage 24g, the damping property thereof would be such that, as shown with the broken line in Fig. 3, the damping force would rapidly change when the piston speed is changed from the middle-speed range to the high-speed range.

As above, in the valve structure of the damper of this embodiment, when the piston speed is in the middle-speed range, the damping force is controlled to low, and once the piston speed is reached to the high-speed range, the damping force can be increased more than when the piston speed is in the middle-speed range. Therefore, even when the piston speed is reached to the high-speed range, the sufficient damping force is provided, the vibration control is sufficiently performed, and the riding quality in the vehicle can be improved.

Further, under the situation in which the vibration amplitude is large such that the damper is extended the most, and, the piston speed is reached to the high-speed range, the generated damping force of the damper can be increased by increasing the damping coefficient, thereby, the piston speed can be smoothly decreased, and the shock at the time of the most extension can be softened.

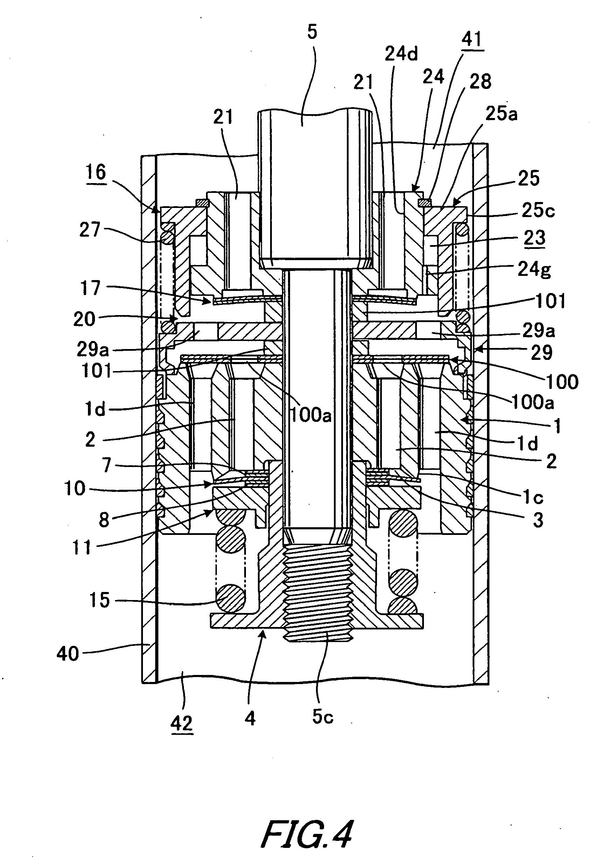

Next, the description is given to the valve structure of damper in the second embodiment. In the valve structure of the damper in this embodiment, as illustrated in Fig. 4, a cap 29 is interveningly provided between the piston 1 and the shutter supporting member 24 such that the first flow channel 20 is easily formed. Since the description would be repeated, as to the same members with those of the valve structure of the damper in the first embodiment, only the same numerical figures are designated, and the detailed descriptions thereof are omitted.

In the following, a detailed description is given to the points differ from the valve structure of the damper in the first embodiment.

The cap 29 is formed into the cylindrical shape having a bottom, layered facing inside at the upper end in Fig. 4 which is the end part of the upper chamber 41 side of the piston 1, and provided with the hole 29a for communicating the inside and the outside of the cap 29 to the bottom part. In another word, the cap 1 is arranged such that the bottom part is facing the upper chamber 41 side and the opening part is facing the lower chamber 42.

The first flow channel 20 is formed with the clearance gap formed between the bottom part of the cap 29 and the shutter supporting member 24, and the hole 29a of the cap 29, and the first flow channel 20 is connected to the upstream side of the port 2, as in the first embodiment, through the hole 100a of the leaf valve 100.

The coil spring 27 which is the spring for biasing the shutter 25 is interveningly provided between the bottom part of the cap 29 and the outer periphery flange 25c, and also in this embodiment, the open/close valve 16 is constructed with the shutter 25 and the coil spring 27. Further, in the case of this embodiment, the lower end of the main body 25a of the shutter 25 in Fig. 4 is in contact against the upper end of the bottom part of the cap 29 in Fig. 4, thereby, the first flow channel 20 can be closed.

The other constructions in this embodiment are the same as the constructions of the valve structure in the first embodiment, and the action and the operation thereof is also the same as the valve structure in the first embodiment.

Therefore, also in the valve structure of the damper in this embodiment, when the piston speed is in the middle-speed range, the damping force is controlled to low, and once the piston speed is reached to the high-speed range, damping force can be increased more than when the piston speed is in the middle-speed range, and so even when the piston speed is reached to the high-speed range, the sufficient damping force is provided, the vibration control is sufficiently performed, and the riding quality in the vehicle can be improved.

Further, under the situation in which the vibration amplitude is large such that the damper is extended the most, and, the piston speed is reached to the high-speed range, the generated damping force of the damper can be increased by increasing the damping coefficient, thereby, the piston speed can be smoothly decreased, and the shock at the time of the most extension can be softened.

Further, in the valve structure in this embodiment, since the shutter 25 is contacted against the cap 29, the leaf valve 100 is exempt from damage and excellent in durability. Further, since there is no risk of interference of the leaf valve 100 with the shutter 25 or the coil spring 27, further stable damping force can be generated.

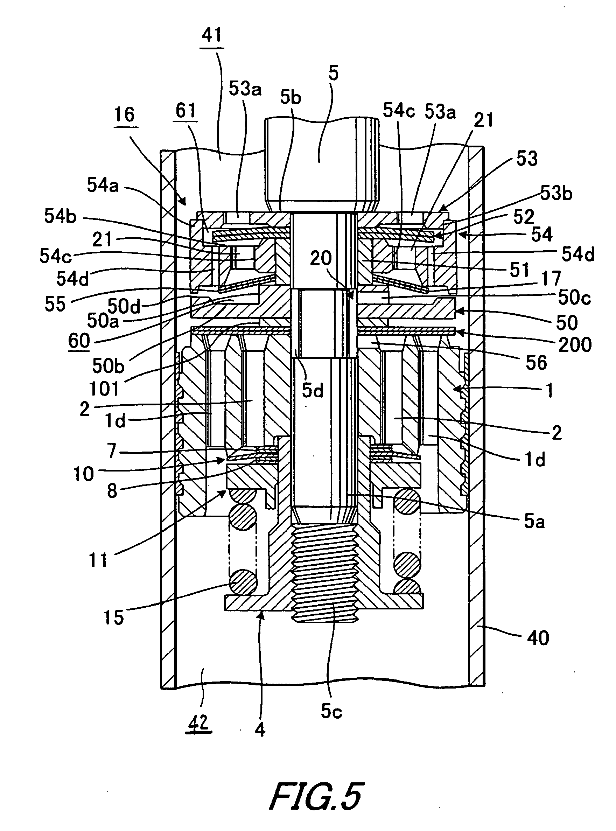

Finally, a description is given of the valve structure of the damper in the third embodiment. The valve structure of the damper in this embodiment is, as illustrated in Fig. 5, different from the valve structure in the first embodiment in the construction above the piston 1 in Fig. 5.

As illustrated in Fig. 5, above the piston 1 in Fig. 5, the leaf valve 200 and the spacer 101 are layered. Further, the ring-shaped plate 50, the spacer 51, the leaf valve 52, the stopper 53 are layered in this order. Further, the shutter 54 is interveningly provided to the outer periphery of the spacer 51, and between the ring-shaped plate 50 and the stopper 53. The ring-shaped plate spring 55 is interveningly provided between the shutter 54 and the ring-shaped plate 50 to bias the shutter 54 towards the stopper 53 side.

In the following, the detailed descriptions are given for each part.

The spacer 51 is tubular and the tip end 5a of the piston rod 5 is inserted through the inner periphery side of the spacer 51.

The leaf valve 52 is layered above the spacer 51 in Fig. 5, and further, the ring-shaped stopper 53 is layered above the leaf valve 52 in Fig. 5, and the stopper 53 is provided with the hole 53a penetrating through from the top to the bottom, and the hole 53a is closed with the leaf valve 52.

The ring-shaped plate 50, the spacer 51, the leaf valve 52, and the stopper 53 are fixed to the tip end 5a of the piston rod 5 by being sandwiched between the stepped part 5b of the piston rod 5 and the piston nut 4.

The ring-shaped plate 50 is provided with the cylindrical part 50a, the flange 50b projected outward from the lower end of the cylindrical part 50a in Fig. 5, the hole 50c communicating the inside and the outside of the cylindrical part 50a, and the dam 50d provided on the outer periphery of the flange 50b. The cylindrical part 50a is fit into the outer periphery of the tip end 5a of the piston rod 5, and interveningly provided between the spacer 101 layered on the leaf valve 200 and the spacer 51.

The hole 50c is communicated into the port 2 through the inside passage 5d provided to the tip end 5a of the piston rod 5 and the notch 56 provided to the upper end of the inner periphery part of the piston 1.

The shutter 54 is provided with the outer cylinder part 54a, the stepped flange 54b projected from the inner periphery of the outer cylinder part 54a, the shutter port 54c communicating the above and below the inner periphery side of the stepped part of the flange 54b, and the orifice passage 54d communicating the above and below the outer periphery side of the stepped part of the flange 54b.

The inner periphery of the flange 54b is slidably contacted to the outer periphery of the spacer 51 and at the same time, the upper end inner periphery of the outer cylinder part 54a is slidably contacted to the notch 53b provided to the outer periphery of the stopper 53.

The shutter 54 is capable of being moved up and in downward direction in Fig. 5 relative to the spacer 51 and the ring-shaped plate 50, and the movement of to the upper side in Fig. 5 is restricted by the stopper 53. The pressure chamber 61 is formed by the space between the upper end of the shutter 54 and the lower end of the stopper 53.

Further, the shutter 54 is biased to the stopper 53 side that is the upper side in Fig. 5 by the ring-shaped plate spring 55 interveningly provided between the upper end inner periphery of the cylindrical part 50a of the ring-shaped plate 50 in Fig. 5 and the flange 54b of the shutter 54.

The outer diameter of the ring-shaped plate spring 55 has larger diameter than the diameter of the stepped part of the flange 54b, and when the ring-shaped plate spring 55 is arranged, the surface of the shutter 54 side which becomes the upper end of the ring-shaped plate spring 55 in Fig. 5 is contacted against the top part of the stepped part of the flange 54b and the ring-shaped plate spring 55 closes the shutter port 54c penetrating through the inner periphery side of the stepped part of the flange 54b from the top to the bottom.

In the valve structure of the damper in the third embodiment, the first flow channel 20 is formed with the clearance gap 60 between the ring-shaped plate 50 and the shutter 54, the inside passage 5d, and the notch 56 provided to the upper end inner periphery part of the piston 1.

The open/close valve 16 is constructed with the shutter 54, the stopper 53 for restricting the movement of the shutter 54 to the upper chamber 41 side, and the ring-shaped plate spring 55 interveningly provided between the shutter 54 and the ring-shaped plate 50 for biasing the shutter 54 towards the stopper 53 side.

The second flow channel 21 is formed with, the shutter port 54c which is the hole provided in the shutter 54 and communicated to the clearance gap 60 between the ring-shaped plate 50 and the shutter 54, inside passage 5d, and the notch 56.

The relief valve 17 is constructed by closing the shutter port 54c with the ring-shaped plate spring 55.

In the valve structure of the damper constructed as such, when the piston speed-during the piston's 1 moving upward in Fig. 5 relative to the cylinder 40- is in the low-speed range, since the difference between the pressure of the upper chamber 41 and the pressure in the first flow channel 20 is not large, the shutter 54 is not contacted against the dam 50d formed to the outer periphery of the ring-shaped plate 50, and the first flow channel 20 is not closed.

When the piston speed is in the middle-speed range, the difference between the pressure in the upper chamber 41 and the pressure in the first flow channel 20 becomes larger, and the larger thrust compared to that when the speed of the piston 1 is in the low-speed range is applied to the shutter 54. The shutter 54, however, is not moved to the ring-shaped plate 50 side and the flow channel area of the first flow channel 20 is not reduced. As above, when the speed of the piston 1 is in the middle-speed range, the open/close valve 16 is set so as not to close the first flow channel 20, thereby maintaining the communication of the first flow channel 20 with the upper chamber 41. Further, the shutter port 54c is kept closed by the ring-shaped plate spring 55, when the speed of the piston 1 is in the middle-speed range.

When the piston speed reaches to the high-speed range, the shutter 54 is moved downward in Fig. 5 by receiving the pressure in the upper chamber 41 to close the first flow channel 20 by contacting against the dam 50d of the ring-shaped plate 50. On the other hand, the leaf valve 52 and also the ring-shaped plate spring 55 are deflected to open the hole 53a and the shutter port 54c respectively. Therefore, in the state where the piston speed reaches the high-speed range, the working fluid is moved to the lower chamber 42 from the upper chamber 41 through the second flow channel 21 and the port 2.

In other words, also in valve structure of damper in this embodiment, the first flow channel 20, the second flow channel 21, the open/close valve and the relief valve exhibit the same function with the same action as the first embodiment, therefore the same operations and effects as the valve structure of the damper in the first embodiment can be provided.

Therefore, also in the valve structure of damper in this embodiment, when the piston speed is in the middle-speed range, the damping force is controlled to low, and once the piston speed is reached to the high-speed range, the damping force can be increased more than when the piston speed is in the middle-speed range. And so, even when the piston speed ireaches the high-speed range, the sufficient damping force is provided, the vibration control is sufficiently performed, and the riding quality in the vehicle can be improved.

Further, under the situation in which the vibration amplitude is large such that the damper is extended the most, and, the piston speed is reached to the high-speed range, the generated damping force of the damper can be increased by increasing the damping coefficient, thereby, the piston speed can be smoothly decreased, and the shock at the time of the most extension can be softened.

Further, since the pressure chamber 61 is communicated to the first flow channel 20 through the orifice passage 54d, it would take certain length of time to close the first flow channel 20 with the shutter 54. Therefore, when the piston speed is changed from the middle-speed range to the high-speed range, there is no rapid change of the damping force, and the vehicle passenger would not feel uncomfortable feeling with the rapid change of the damping force or shock.

Further, in the valve structure of the present invention, the leaf valve 10 is biased by the coil spring 15 which is the biasing means and at the same time, is layered such that the distance from the piston 1 which is the valve disc can be varied. When the piston speed is in the middle-speed range, although the valve capable of lifting the leaf valve 10 from the piston 1 to control the damping force low to improve the riding quality in the vehicle is applied, it is not limited thereto, and the valve in which the inner periphery of the leaf valve 10 is fixed to the tip end 5a of the piston rod 5 regardless of being biased by the biasing means, and the outer periphery side is deflected to be separated from the valve seat 1c to open the port 2 may be applied. Even in the such case, when the piston speed reaches the high-speed range, the damping force can be made to larger than when the piston speed is in the middle-speed range, and the effect of the present invention is not lost.

Although the descriptions as to each of the embodiments of the valve structure are concluded with the above, it is possible to carry out the valve structure of the present invention to the compressing side damping valve of the piston part of the damper or to the base valve part, and, of course, generally it is possible to apply to the valve of the damper functioning as the damping force generating component for generating the damping force.

## Claims

1. A valve structure of a damper comprising a piston (1) defining a first chamber (41) and a second chamber (42) within a damper and having a port (2) for communicating the first chamber (41) and the second chamber (42), and
a leaf valve (10) layered to the end surface of the second chamber (42) side of the piston (1), for closing the port (2) against the flowing direction of the working fluid when the working fluid is flowing from the first chamber (41) to the second chamber (42), wherein the valve structure further comprises
a first flow channel (20) and a second flow channel (21) for respectively connecting the upstream side of the port (2) in the direction of the flow and the first chamber (41),
an open/close valve (16) for closing the first flow channel (20) when the pressure of the first chamber (41) exceeds the pressure inside the first flow channel (20) by the prescribed level,
a relief valve (17) provided in the second flow channel (21), which is opened with the pressure higher than the pressure with which the open/close valve (16) is closed, and
**characterized in that**
a pressure chamber (23; 61) is formed between a shutter (25; 54) and a shutter supporting member (24), and prevents the first flow channel (20) from closing rapidly, and
an orifice passage (24g; 54d) for applying the pressure in the first flow channel (20) to the pressure chamber (23; 61) is provided to the shutter supporting member (24), wherein the shutter (25) is installed to the outer periphery of the shutter supporting member (24) in a freely slidable manner, and closes the first flow channel (20) when the pressure in the first chamber (41) exceeds the pressure in the first flow channel (20) by the prescribed level.

2. The valve structure of the damper according to claim 1 wherein,
the first flow channel (20) is formed between the piston (1) and the shutter supporting member (24) facing to the piston (1),
the open/close valve (16) is provided with;
the shutter (25) capable of closing the first flow channel (20) by being contacted against the piston (1); and
a spring (27) for biasing the shutter (25) to the direction away from the piston (1), the second flow channel (21) is formed with a supporting port (24d) formed in the shutter supporting member (24), and
the relief valve (17) is a leaf valve (26) layered to the end surface of the piston (1) side of the shutter supporting member (24) so as to close the supporting port (24d).

3. The valve structure of the damper according to claim 1 further comprising,
a cap (29) of cylindrical shape having a bottom layered to the end part of the first chamber (41) side of the piston (1) with facing inside, wherein
the first flow channel (20) is formed with clearance gap formed between the bottom part of the cap (29) and the shutter supporting member (24) facing to the bottom part of the cap (29), and with a hole (29a) provided to the bottom part of the cap, the open/close valve (16) is provided with
the shutter (25) capable of closing the first flow channel (20) by being contacted against the bottom part of the cap (29); and
a spring (27) for biasing the shutter (25) to the direction away from the bottom part of the cap (29), the second flow channel (21) is formed with a supporting port (24d) provided to the shutter supporting member (24), and
the relief valve (17) is a leaf valve (26) layered to the end surface of the cap (29) side of the shutter supporting member (24) so as to close the supporting port (24d).

4. The valve structure of the damper according to claim 1, wherein
the first flow channel (20) is formed with a clearance gap (60) between a ring-shaped plate (50) provided to the outer periphery of the first chamber (41) side of the shaft member (5) and a shutter (54) provided to the first chamber (41) side of the ring-shaped plate (50) and installed to the outer periphery of the shaft member (5) in a freely slidable manner, and the inside passage (5d) provided to the shaft member (5) and communicating the clearance gap (60) and the port (2), and wherein the open/close valve (16) is provided with
a shutter (54),
a stopper (53) for restricting the movement of the shutter (54) to the first chamber (41) side, and
a ring-shaped plate spring (55) interveningly provided between the shutter (54) and the ring-shaped plate (50) for biasing the shutter (54) towards the stopper (53) side, the second flow channel (21) is formed with a hole (54c) and the inside passage (5d), the hole (54c) being provided to the shutter (54) and communicated to the clearance gap (60) between the ring-shaped plate (50) and the shutter (54), and
the relief valve (17) is constructed by closing the hole (54c) with the ring-shaped plate spring (55).

5. The valve structure of the damper according to any one of claims 1 to 4 wherein,
the leaf valve (10) is layered so as to be able to change the distance to the piston (1), and
further comprising a biasing means (15) for biasing the leaf valve (10) to the direction closing the port (2).

## Patentansprüche

1. Ventilstruktur einer Dämpfungseinrichtung, die einen Kolben (1), der eine erste Kammer (41) und eine zweite Kammer (42) im Inneren einer Dämpfungseinrichtung bildet und eine Öffnung (2) zum Verbinden der ersten Kammer (41) und der zweiten Kammer (42) aufweist, und
ein Klappenventil (10) umfasst, das auf die Endfläche der Seite des Kolbens (1) an der zweiten Kammer (42) aufgesetzt ist, um die Öffnung (2) gegen die Fließrichtung des Arbeitsfluids zu schließen, wenn das Arbeitsfluid aus der ersten Kammer (41) in die zweite Kammer (42) fließt, wobei die Ventilstruktur des Weiteren umfasst:
einen ersten Strömungskanal (20) und einen zweiten Strömungskanal (21), die jeweils die in der Strömungsrichtung stromauf liegende Seite der Öffnung (2) und die erste Kammer (41) verbinden,
ein Öffnungs-/Schließventil (16), mit dem der erste Strömungskanal (20) geschlossen wird, wenn der Druck der ersten Kammer (41) den Druck im Inneren des ersten Strömungskanals (20) um den vorgeschriebenen Pegel übersteigt,
ein Entlastungsventil (17), das in dem zweiten Strömungskanal (21) vorhanden ist und geöffnet wird, wenn der Druck höher ist als der Druck, bei dem das Öffnungs-/Schließventil (16) geschlossen wird; und
**dadurch gekennzeichnet, dass**
eine Druckkammer (23; 61) zwischen einem Verschluss (25; 54) und einem Verschluss-Trageelement (24) ausgebildet ist und verhindert, dass sich der erste Strömungskanal (20) schnell schließt, und
ein Lochdurchlass (24g; 54d) zum Ausüben des Drucks in dem ersten Strömungskanal (20) auf die Druckkammer (23; 61) für das Verschluss-Trageelement (24) vorhanden ist, wobei der Verschluss (25) an dem äußeren Rand des Verschluss-Trageelementes (24) frei verschiebbar installiert ist und den ersten Strömungskanal (20) schließt, wenn der Druck in der ersten Kammer (41) den Druck in dem ersten Strömungskanal (20) um den vorgegebenen Pegel übersteigt.

2. Ventilstruktur der Dämpfungseinrichtung nach Anspruch 1, wobei der erste Strömungskanal (20) zwischen dem Kolben (1) und dem Verschluss-Trageelement (24) dem Kolben (1) zugewandt ausgebildet ist,
das Öffnungs-/Schließventil (16) versehen ist mit:
dem Verschluss (25), der den ersten Strömungskanal (20) schließen kann, indem er mit dem Kolben (1) in Kontakt gebracht wird; und
einer Feder (27), mit der der Verschluss (25) in der Richtung von dem Kolben (1) weg gespannt wird, wobei der zweite Strömungskanal (21) mit einer Trageöffnung (24d) versehen ist, die in dem Verschluss-Trageelement (24) ausgebildet ist, und
das Entlastungsventil (17) ein Klappenventil (26) ist, das auf die Endfläche der Seite des Kolbens (1) des Verschluss-Trageelementes (24) geschichtet ist, um die Trageöffnung (24d) zu schließen.

3. Ventilstruktur der Dämpfungseinrichtung nach Anspruch 1, die des Weiteren umfasst:
eine Kappe (29) zylindrischer Form, die eine Unterseite hat, die auf den Endteil der Seite des Kolbens (1) an der ersten Kammer (41) nach innen gewandt aufgesetzt ist, wobei
der erste Strömungskanal (20) mit einem Abstandsspalt zwischen dem unteren Teil der Kappe (29) und dem Verschluss-Trageelement (24), der dem unteren Teil der Kappe (29) zugewandt ist, sowie mit einem Loch (29a) versehen ist, das an dem unteren Teil der Kappe vorhanden ist,
das Öffnungs-/Schließventil (16) versehen ist mit:
dem Verschluss (25), der den ersten Strömungskanal (20) schließen kann, indem er mit dem Kolben (1) in Kontakt gebracht wird; und
einer Feder (27), mit der der Verschluss (25) in der Richtung von dem Kolben (1) weg gespannt wird, wobei der zweite Strömungskanal (21) mit einer Trageöffnung (24d) versehen ist, die in dem Verschluss-Trageelement (24) ausgebildet ist, und
das Entlastungsventil (17) ein Klappenventil (26) ist, das auf die Endfläche der Seite der Kappe (29) des Verschluss-Trageelementes (24) aufgesetzt ist, um die Trageöffnung (24d) zu schließen.

4. Ventilstruktur der Dämpfungseinrichtung nach Anspruch 1, wobei
der erste Strömungskanal (20) mit einem Abstandsspalt (60) zwischen einer ringförmigen Platte (50), die an dem äußeren Rand der Seite des Wellenelementes (5) an der ersten Kammer (41) vorhanden ist, und einem Verschluss (54) versehen ist, der an der Seite der ringförmigen Platte (50) an der ersten Kammer (41) vorhanden ist und am äußeren Rand des Wellenelementes (5) frei verschiebbar installiert ist, und der innere Durchlass (5d) an dem Wellenelement (5) vorhanden ist und den Abstandsspalt (60) und die Öffnung (2) verbindet, und wobei das Öffnungs-/Schließventil (16) versehen ist mit:
einem Verschluss (54),
einem Anschlag (53) zum Einschränken der Bewegung des Verschlusses (54) zur Seite der ersten Kammer (41), und
einer ringförmigen Scheibenfeder (55), die zwischen dem Verschluss (54) und der ringförmigen Platte (50) vorhanden ist, um den Verschluss (54) zur Seite des Anschlags (53) hin zu spannen, wobei der zweite Strömungskanal (21) mit einem Loch (54c) und dem inneren Durchlass (5d) versehen ist, das Loch (54c) an dem Verschluss (54) vorhanden ist und mit dem Abstandsspalt (60) zwischen der ringförmigen Platte (50) und dem Verschluss (54) verbunden ist, und
das Entlastungsventil (17) gebildet wird, indem das Loch (54c) mit der ringförmigen Scheibenfeder (55) geschlossen wird.

5. Ventilstruktur der Dämpfungseinrichtung nach einem der Ansprüche 1 bis 4, wobei
das Klappenventil (10) so aufgesetzt ist, dass es den Abstand zu dem Kolben (1) ändern kann, und
die Struktur des Weiteren eine Spanneinrichtung (15) umfasst, mit der das Klappenventil (10) in der Richtung zum Schließen der Öffnung (2) gespannt wird.

## Revendications

1. Structure de soupape d'un amortisseur, comprenant un piston (1) qui définit une première chambre (41) et une seconde chambre (42) à l'intérieur d'un amortisseur et qui comporte un orifice (2) pour la communication entre la première chambre (41) et la seconde chambre (42), et
une soupape à lamelle (10) qui est appliquée en couches sur la surface d'extrémité du piston (1) côté seconde chambre (42) pour fermer l'orifice (2) à l'encontre du sens d'écoulement du fluide de travail quand ledit fluide coule de la première chambre (41) vers la seconde chambre (42), la structure de soupape comprenant par ailleurs
un premier conduit d'écoulement (20) et un second conduit d'écoulement (21) pour relier respectivement le côté amont de l'orifice (2), dans le sens d'écoulement, et la première chambre (41),
une soupape d'ouverture/fermeture (16) pour fermer le premier conduit d'écoulement (20) quand la pression de la première chambre (41) dépasse la pression à l'intérieur du premier conduit d'écoulement (20) selon le niveau prescrit,
une soupape de détente (17), prévue dans le second conduit d'écoulement (21), qui s'ouvre avec la pression supérieure à la pression avec laquelle la soupape d'ouverture/fermeture (16) se ferme, et
**caractérisée en ce qu'**une chambre de pression (23 ; 61) est formée entre un obturateur (25 ; 54) et un élément de support d'obturateur (24), et empêche le premier conduit d'écoulement (20) de se fermer rapidement ; et
**en ce qu'**un passage d'orifice (24g ; 54d) pour appliquer la pression dans le premier conduit d'écoulement (20) à la chambre de pression (23 ; 61) est prévu sur l'élément de support d'obturateur (24), étant précisé que l'obturateur (25) est installé sur la périphérie extérieure de l'élément de support d'obturateur (24) de manière à pouvoir coulisser librement, et ferme le premier conduit d'écoulement (20) quand la pression dans la première chambre (41) dépasse la pression dans le premier conduit d'écoulement (20) selon le niveau prescrit.

2. Structure de soupape de l'amortisseur selon la revendication 1, dans lequel le premier conduit d'écoulement (20) est formé entre le piston (1) et l'élément de support d'obturateur (24) qui fait face au piston (1),
la soupape d'ouverture/fermeture (16) est pourvue :
de l'obturateur (25) apte à fermer le premier conduit d'écoulement (20) en venant en contact contre le piston (1) ;
d'un ressort (27) pour contraindre l'obturateur (25) à l'opposé du piston (1), le second conduit d'écoulement (21) est pourvu d'un orifice de support (24d) qui est formé dans l'élément de support d'obturateur (24), et
la soupape de détente (17) est une soupape à lamelle (26) qui est appliquée en couches sur la surface d'extrémité de l'élément de support d'obturateur (24) côté piston (1) de manière à fermer l'orifice de support (24d).

3. Structure de soupape de l'amortisseur selon la revendication 1, comprenant par ailleurs un chapeau (29) de forme cylindrique qui a un fond appliqué en couches sur la partie d'extrémité du piston (1) côté première chambre (41) et qui est pourvu d'un revêtement, à l'intérieur,
étant précisé que le premier conduit d'écoulement (20) est pourvu d'un espace formé entre la partie du fond du chapeau (29) et l'élément de support d'obturateur (24) qui fait face à celle-ci, et d'un trou (29a) qui est prévu dans la partie du fond du chapeau,
que la soupape d'ouverture/fermeture (16) est pourvue de l'obturateur (25) apte à fermer le premier conduit d'écoulement (20) en étant en contact contre la partie du fond du chapeau (29) ; et
d'un ressort (27) pour contraindre l'obturateur (25) à l'opposé de la partie du fond du chapeau (29),
que le second conduit d'écoulement (21) est pourvu d'un orifice de support (24d) prévu sur l'élément de support d'obturateur (24), et
que la soupape de détente (17) est une soupape à lamelle (26) qui est appliquée par couches sur la surface d'extrémité de l'élément de support d'obturateur (24) côté chapeau (29) de manière à fermer l'orifice de support (24d).

4. Structure de soupape de l'amortisseur selon la revendication 1, dans lequel le premier conduit d'écoulement (20) est pourvu d'un espace (60) entre une plaque annulaire (50) prévue sur la périphérie extérieure de l'élément en forme de tige (5) côté première chambre (41) et un obturateur (54) prévu sur le côté première chambre (41) de la plaque annulaire (50) et installé sur la périphérie extérieure de l'élément en forme de tige (5) de manière à pouvoir coulisser librement, et du passage intérieur (5d) qui est prévu sur l'élément en forme de tige (5) et qui fait communiquer ledit espace (60) et l'orifice (2), et dans lequel la soupape d'ouverture/fermeture (16) est pourvue
d'un obturateur (54),
d'une butée (53) qui est destinée à limiter le mouvement de l'obturateur (54) vers le côté première chambre (41), et
d'un ressort plat annulaire (55) qui est disposé activement entre l'obturateur (54) et la plaque annulaire (50) pour contraindre l'obturateur (54) vers le côté butée (53), le second conduit d'écoulement (21) est pourvu d'un trou (54c) et du passage intérieur (5d), le trou (54c) étant prévu sur l'obturateur (54) et communiquant avec l'espace (60) entre la plaque annulaire (50) et l'obturateur (54), et
la soupape de détente (17) est construite en fermant le trou (54c) avec le ressort plat annulaire (55).

5. Structure de soupape de l'amortisseur selon l'une quelconque des revendications 1 à 4, dans laquelle la soupape à lamelle (10) est appliquée en couches de manière à pouvoir modifier la distance par rapport au piston (1), et
comprenant par ailleurs un moyen de contrainte (15) pour contraindre la soupape à lamelle (10) vers le sens de fermeture de l'orifice (2).
